# EUROPEAN PATENT SPECIFICATION

(11) **EP 4 368 436 B1**
(45) Date of publication and mention of the grant of the patent: **18.11.2026**
(21) Application number: 23203349.8
(22) Date of filing: 12.10.2023
(51) Int. Cl.: B60K 23/00, B60K 26/00, B60K 35/00

(54) **WORK VEHICLE**
ARBEITSFAHRZEUG
VÉHICULE DE TRAVAIL

(30) Priority: 14.11.2022 JP 2022181872
(43) Date of publication of application: 15.05.2024
(73) Proprietor: Kubota Corporation, Osaka-shi, Osaka 530-0011 (JP)
(72) Inventor: BESSHO, Hiroki, SAKAI-SHI, OSAKA, 5900908 (JP)
(74) Representative: Cabinet Beau de Loménie

(56) References cited:
- DE-A1- 102018 208 500
- DE-A1- 102021 106 153
- JP-A- 2014 029 215
- JP-A- 2022 060 945
- JP-B2- 5 069 669
- US-A1- 2017 355 264

## Description

### BACKGROUND OF THE INVENTION

### 1. Field of the Invention

The present invention relates to a work vehicle in which a loading platform for loading cargo is included in a rear section of a travel body.

### 2. Description of the Related Art

A conventional work vehicle having the above configuration includes a travel body having a boarding and driving section that a driver boards, and this boarding and driving section includes an operation lever, an operation pedal, or the like for changing the moving speed (vehicle speed) of the travel body (e.g., see JP 2022-60945A).

JP 2022-60945A is an example of related art. JP 5 069669 B2 is another example.

### SUMMARY OF THE INVENTION

The work vehicle with the above configuration performs work with cargo loaded on the loading platform in some cases. In some cases, the work vehicle repeatedly performs a task of supplying some of the cargo loaded on the loading platform to a predetermined location in a field, and thereafter moving the travel body slightly and supplying some of the cargo to a predetermined location in the field again. Also, the work vehicle performs a task of collecting and loading cargo placed in the field at intervals on the loading platform while moving the travel body little by little.

However, in the conventional configuration described above, a speed change lever, an operation pedal, or the like for performing a speed change operation is provided in the driving section of the travel body, and therefore every time the driver loads or unloads cargo, the driver needs to board and disembark from the driving section of the travel body to perform the speed change operation. For this reason, there has been a disadvantage in that operation becomes cumbersome and work efficiency decreases.

In view of this, it has been desired to enable performing the operation of repeatedly moving and stopping the travel body as described above without any trouble.

A characteristic configuration of the work vehicle according to the present invention includes a travel body having a rear section provided with a loading platform for placing cargo thereon, in which the travel body includes: a motor section, a travel device, a driving section rideable by a driver, at least one speed change operation tool configured to give a command regarding a speed change operation, and a transmission device configured to change a speed of motive power of the motor section and transmit the changed motive power to the travel device, and switch a speed change state based on the command from the at least one speed change operation tool, and the at least one speed change operation tool includes a main operation tool provided in the driving section, and an auxiliary operation tool provided at a location in the travel body different from the driving section.

According to the present invention, when the driver is traveling while seated in the driving section, the driver can efficiently perform a speed change operation by operating the main operation tool located in the driving section. Then, when the driver disembarks from the travel body to load or unload cargo onto or from the loading platform or the like, the driver disembarks from the driving section, moves to the outside of the travel body, and loads or unloads the cargo or the like. At this time, even if the driver repeatedly performs a task of loading or unloading the cargo and a task of moving the travel body over a short distance, by operating the auxiliary operation tool, the driver can switch the speed change state of the transmission device without returning to the driving section.

Accordingly, when repeatedly moving the travel body or the like, the driver can perform a speed change operation from the outside of the travel body without returning to the driving section each time, and therefore can perform the operation of repeatedly moving and stopping the travel body without any trouble.

In the present invention, it is preferable that the auxiliary operation tool is provided on a lateral side of a body of the work vehicle.

According to this configuration, the driver can switch the speed change state of the transmission device to repeatedly move and stop the travel body by operating the auxiliary operation tool located on the lateral side of the vehicle body. The driver can move the travel body forward or in reverse while being laterally outside the travel body, and thus there is no risk that the travel body will come into contact with the driver's body.

In the present invention, it is preferable that the driving section is provided with a rollover protection structure, and the auxiliary operation tool is provided on the rollover protection structure.

According to this configuration, the rollover protection structure protects the driver, for example, in the event of a rollover, and is a highly rigid member. Also, the auxiliary operation tool can be supported in a stable state by using such a rollover protection structure.

In the present invention, it is preferable that the auxiliary operation tool is provided on the loading platform.

According to this configuration, when loading and unloading cargo onto and from the loading platform, the auxiliary operation tool provided on the loading platform can be operated to repeatedly move and stop the travel body, and the driver can perform the task without a large amount of movement.

In the present invention, it is preferable that the auxiliary operation tool is provided at a rear end portion of the loading platform.

According to this configuration, for example, when the driver repeatedly performs a task of loading and unloading cargo onto and from the loading platform and a task of moving the vehicle forward little by little, the driver can perform the tasks efficiently by operating the auxiliary operation tool from the rear of the travel body.

In the present invention, it is preferable that in response to a travel command from the auxiliary operation tool, the transmission device switches to a low-speed travel state approximately corresponding to a walking speed.

According to this configuration, when the driver moves the travel body while being on the outside of the travel body, the driver can safely perform the task because the travel body moves at approximately the same speed as the walking speed.

In the present invention, it is preferable that the auxiliary operation tool is a push-operated switch configured to give a travel command in response to being pushed.

According to this configuration, since the travel body can be moved with a push operation, the operation can be performed easily.

In the present invention, it is preferable that the auxiliary operation tool is a lever switch configured to switch between a neutral state and a travel command state, and biased to return to the neutral state.

According to this configuration, the travel body can be moved with an operation of switching the lever switch to the travel command state, and in response to the operation being stopped and the hand being removed, the vehicle enters the neutral state and stops traveling, and therefore there is no risk of erroneous operation, and operation can be performed safely.

### BRIEF DESCRIPTION OF THE DRAWINGS

FIG. 1 is a side view of a work vehicle.
FIG. 2 is a diagram showing a control configuration and a power transmission system.
FIG. 3 is a side view showing an auxiliary speed change tool.
FIG. 4 is a side view showing an auxiliary speed change tool.
FIG. 5 is a side view showing an auxiliary speed change tool according to another embodiment.

### DETAILED DESCRIPTION OF PREFERRED EMBODIMENTS

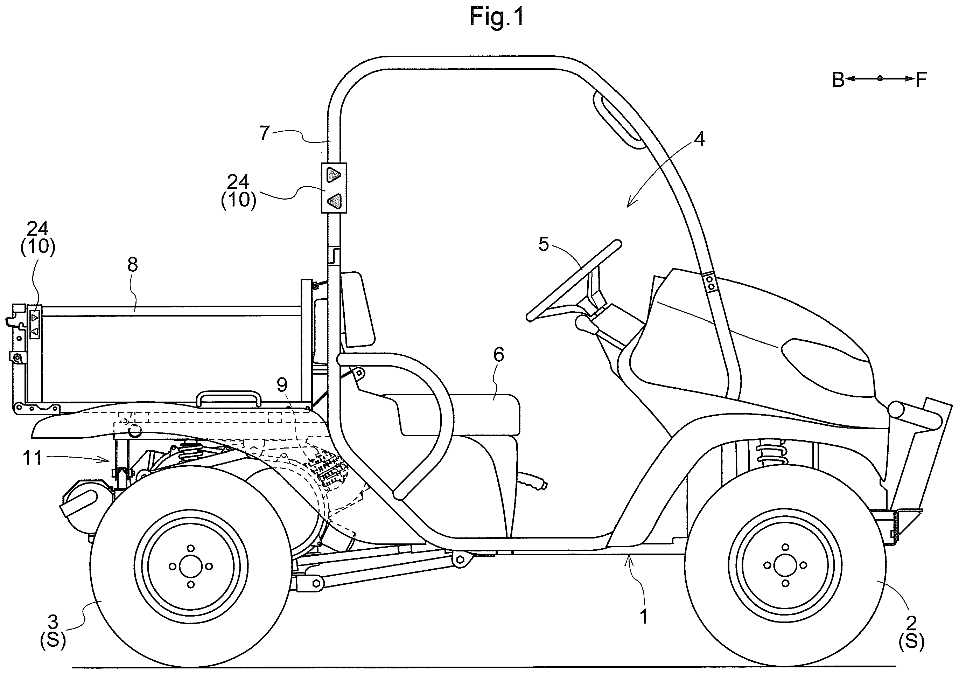

Embodiments of the present invention will be described below with reference to the drawings. FIG. 1 is a right side view showing the entirety of a work vehicle according to the present invention. The direction [F] shown in FIG. 1 is defined as the frontward direction of the travel body 1, the direction [B] is defined as the rearward direction of the travel body 1, the direction toward the front side of the page is defined as the rightward direction of the travel body 1, and the direction toward the back side of the page is defined as the leftward direction of the travel body 1.

The work vehicle has a travel body 1, in which a pair of left and right front wheels 2 serving as a travel device S are drivably and steerably equipped, and a pair of left and right rear wheels 3 serving as a travel device S are drivably equipped. The front section of the travel body 1 includes a driving section 4. The driving section 4 includes a steering wheel 5 for steering the front wheels 2, and a driver's seat 6. The driving section 4 is protected by a rollover protection structure 7. The rear side of the driving section 4 is provided with a loading platform 8. An engine 9 serving as a motor section is provided below the loading platform 8.

### [Power transmission to front wheels 2 and rear wheels 3]

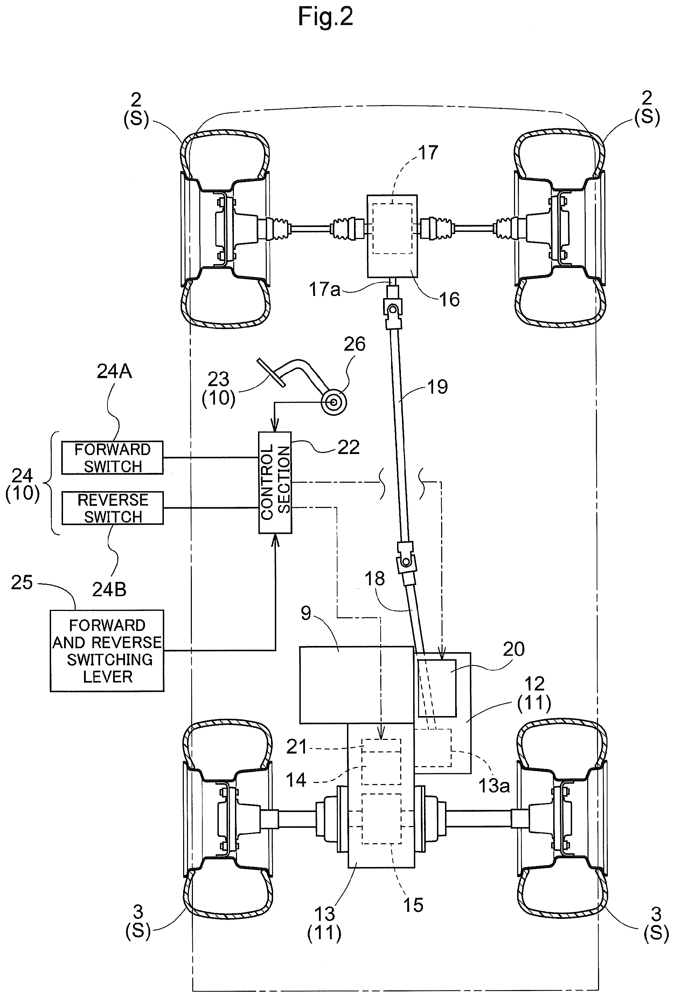

The power transmission structure is configured as shown in FIG. 2. This work vehicle includes the engine 9 as a drive source, and motive power is transmitted from the engine 9 to the front wheels 2 and the rear wheels 3. The work vehicle is also provided with a transmission device 11 capable of switching a speed change state based on a command from a speed change operation tool 10.

The transmission device 11 includes a continuous speed change section 12 including a hydrostatic continuously-variable transmission mechanism (HST) that can steplessly change a speed of the motive power of the engine 9, and a transmission case section 13 that is provided in a rear section of the engine 9 and has a gear-type transmission mechanism inside.

That is, as shown in FIG. 2, the continuous speed change section 12 is provided spanning from the lateral side of the engine 9 to the lateral side of the transmission case section 13. Inside the transmission case section 13, a forward and reverse switching mechanism 14 for switching the output after the speed change of the continuous speed change section 12 between a forward travel state and a reverse travel state, and a rear wheel differential mechanism 15 are installed as a gear-type transmission mechanism. Below the continuous speed change section 12, a front wheel output section 13a is formed on the lateral side of the transmission case section 13. A front wheel differential mechanism 17 is installed inside the front wheel drive case 16.

The motive power of the output shaft (not shown) of the engine 9 is input to the continuous speed change section 12 and the output of the continuous speed change section 12 is input to the transmission case section 13. The motive power input to the transmission case section 13 is branched and transmitted to the rear wheel transmission system and the front wheel transmission system. The motive power transmitted to the rear wheel transmission system is input to the rear wheel differential mechanism 15 and transmitted from the rear wheel differential mechanism 15 to the left and right rear wheels 3. The motive power transmitted to the front wheel transmission system is transmitted from the front wheel output section 13a to an input shaft 17a of the front wheel differential mechanism 17 via a first rotating shaft 18 and a second rotating shaft 19, and is transmitted from the front wheel differential mechanism 17 to the left and right front wheels 2.

The continuous speed change section 12 has a well-known configuration and therefore will not be described in detail, but includes a hydraulic pump and a hydraulic motor, and can change the drive speed steplessly by changing the angle of a swash plate. The change adjustment of the swash plate angle is performed by a first operation mechanism 20 for speed change, which includes, for example, a hydraulic cylinder, an electric motor, or the like.

The forward and reverse switching mechanism 14 is of a gear switching type, and can switch the motive power transmitted to the travel device S to a forward state and a reverse state. The switching operation of the forward and reverse switching mechanism 14 is performed with a second operation mechanism 21 for forward and reverse switching, which includes, for example, a hydraulic cylinder, an electric motor, or the like.

As shown in FIG. 2, the work vehicle includes a control section 22 that controls the operations of the first operation mechanism 20 and the second operation mechanism 21. The control section 22 has a microcomputer and executes control according to a pre-set control program.

The control section 22 switches the speed change state of the transmission device 11 based on a command from the speed change operation tool 10. Also, the work vehicle includes, as the speed change operation tool 10, a speed change pedal 23 serving as a main operation tool provided in the driving section 4, and an auxiliary operation tool 24 provided in a portion of the travel body 1 different from the driving section 4. The driving section 4 is also provided with a forward and reverse switching lever 25 as a forward and reverse switching operation tool for switching the forward direction when changing speed using the speed change pedal 23.

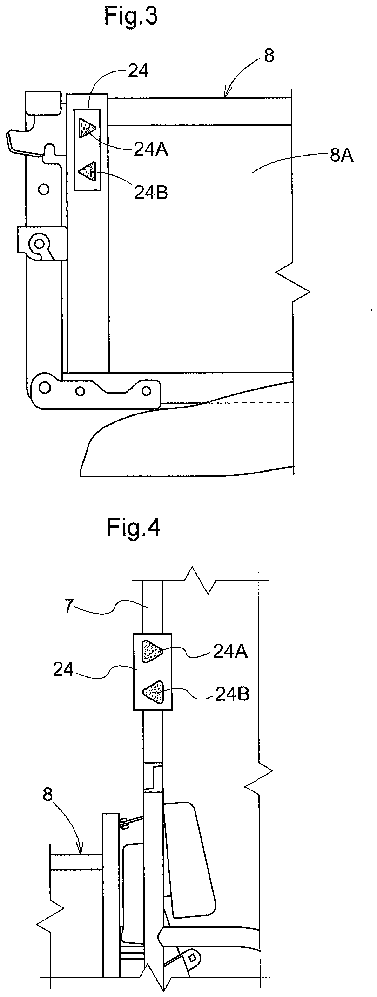

The auxiliary operation tool 24 is provided on the lateral side of the travel body 1 and at the rear end of the loading platform 8. Specifically, as shown in FIGS. 1, 3, and 4, the auxiliary operation tool 24 is provided at the rear end of a lateral side wall 8A of the loading platform 8. The auxiliary operation tool 24 includes a forward command switch 24A for commanding forward travel, and a reverse command switch 24B for commanding reverse travel. The forward command switch 24A and the reverse command switch 24B are push-operated switches.

Also, an auxiliary operation tool 24 is provided on the lateral side of the travel body 1 and on the lateral side of the rollover protection structure 7. The auxiliary operation tool 24 is the same as the one provided at the rear end of the loading platform 8 in that it includes a forward command switch 24A and a reverse command switch 24B for commanding reverse travel.

### [Speed change operation performed with speed change pedal]

Although not shown in the drawings, the speed change pedal 23 is biased to return to an upper neutral position, and can be operated by the driver by pressing with his or her foot against the return biasing force. A potentiometer 26 for detecting the amount of depression of the speed change pedal 23 is provided, and the detected value of the potentiometer 26 is input to the control section 22.

When forward travel is to be performed, a speed change operation is performed with an operation of the speed change pedal 23 while the forward and reverse switching lever 25 is switched to the forward side, and when reverse travel is to be performed, a speed change operation is performed with an operation of the speed change lever 23 while the forward and reverse switching lever 25 is switched to the reverse side.

The control section 22 controls the operation of the second operation mechanism 21 such that the forward and reverse switching mechanism 14 switches to the forward state in response to the forward and reverse switching lever 25 being switched to the forward side, and controls the operation of the second operation mechanism 21 such that the forward and reverse switching mechanism 14 switches to the reverse state in response to the forward and reverse switching lever 25 being switched to the reverse side. Then, the control section 22 controls the operation of the first operating mechanism 20 such that the vehicle speed increases according to the depression amount of the speed change pedal 23 detected by the potentiometer 26. While the speed change pedal 23 is not depressed, the continuous speed change section 12 is in a neutral state, and travel is stopped. When the speed change pedal 23 is depressed, the vehicle speed increases the more the depression amount increases.

### [Speed change operation with auxiliary operation tool]

Since the auxiliary operation tool 24 is provided at the rear end of the loading platform 8 and the rollover protection structure 7, when the driver disembarks from the driving section 4 and is loading or unloading cargo onto or from the loading platform 8, the auxiliary operation tool 24 is located near the driver. Accordingly, by operating the auxiliary operation tool 24, the driver can move the travel body 1 without returning to the driving section 4.

In response to the driver issuing a command to travel forward by pressing the forward command switch 24A of the auxiliary operation tool 24, the control section 22 controls the operation of the second operation mechanism 21 such that the forward and reverse switching mechanism 14 switches to the forward state, and furthermore controls the operation of the first operation mechanism 20 such that the output after the speed change by the continuous speed change section 12 switches to a low-speed travel state approximately corresponding to a walking speed.

In response to the driver issuing a command to travel in reverse by pressing the reverse command switch 24B of the auxiliary operation tool 24, the control section 22 controls the second operation mechanism 21 such that the forward and reverse switching mechanism 14 switches to the reverse state, and furthermore controls the operation of the first operation mechanism 20 such that the output after the speed change by the continuous speed change section 12 switches to a low-speed travel state approximately corresponding to the walking speed.

The forward command switch 24A and the reverse command switch 24B in the auxiliary operation tool 24 are both used to command forward travel and reverse travel due to a push operation, and in response to the operator removing his or her hand and releasing the push operation, the command is removed, and the travel body 1 enters a travel stop state.

### [Other embodiments]

(1) In the above-described embodiment, the auxiliary operation tool 24 is provided on the lateral side of the travel body 1 and at the rear end of the loading platform 8. However, there is no limitation to such a configuration, and the auxiliary operation tool 24 can be provided at a location other than the rear end of the loading platform 8 as a location in the travel body 1 different from the driving section 4.

Also, the auxiliary operation tool 24 may be provided at a lateral side of the travel body 1 and at an intermediate portion in the front-rear direction of the lateral side wall 8A of the loading platform 8 while facing laterally outward.

The auxiliary operation tool 24 may also be provided at a location other than the rear end of the lateral side wall 8A of the loading platform 8, the rollover protection structure 7, and the intermediate portion in the front-rear direction of the lateral side wall 8A of the loading platform 8. For example, the auxiliary operation tool 24 may also be provided at a location different from the lateral side of the travel body 1, specifically, at an intermediate portion in the left-right direction of the rear section of the loading platform 8.

The auxiliary operation tool 24 may be provided only at one of the above locations, or may be provided at each of the above locations at the same time, and the installation location is not limited to the illustrated locations.

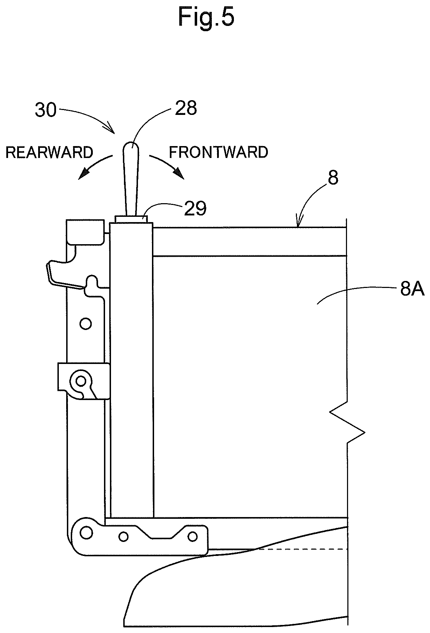

(2) The above-described embodiment showed that the auxiliary operation tool 24 is configured as a push-operated switch. However, the auxiliary operation tool 24 may also be configured as a lever switch 30 that can be switched to a neutral state and a travel command state, and is biased to return to the neutral state. That is, as shown in FIG. 5, the auxiliary operation tool 24 may also be a joystick-shaped lever switch 30 that is supported by a rod-shaped operation tool 28 so as to be swingable at a base end 29, and that can perform a swinging operation in a front-rear direction from a neutral position. In this configuration, the operation tool 28 is biased to return to the neutral position, and when it is swung forward, forward travel is commanded, and when it is swung rearward, reverse travel is commanded.

(3) In the above-described embodiment, when travel is commanded using the auxiliary operation tool 24, the state is switched to a low-speed travel state approximately corresponding to the walking speed. However, various configurations can be used instead of this configuration, such as a configuration in which the vehicle moves at high speed for a set short amount of time each time travel is commanded with the auxiliary operation tool 24, or a configuration in which such short-term high-speed movement is repeated.

(4) In the above embodiment, the work vehicle uses the engine 9 as the drive source for the travel body 1, and the motive power of the engine 9 is changed by the hydrostatic continuously-variable transmission device (HST). However, instead of such a configuration, the work vehicle may use an electric motor as a drive source, the output of the electric motor may be changed and adjusted by an inverter, and the controller 22 may control the operation of the inverter.

### INDUSTRIAL APPLICABILITY

The present invention can be applied to a work vehicle including a travel body with a rear section provided with a loading platform on which cargo can be loaded.

### LIST OF REFERENCE SIGNS

- 1: Travel body
- 4: Driving section
- 7: Rollover protection structure
- 8: Loading platform
- 9: Engine (motor)
- 10: Speed change operation tool
- 11: Transmission device
- 23: Main operation tool
- 24: Auxiliary operation tool
- 24A, 24B: Push-operated switch
- 30: Lever switch

## Claims

1. A work vehicle, comprising a travel body (1),
wherein the travel body (1) includes:
a motor section;
a travel device (S);
a driving section (4) rideable by a driver;
at least one speed change operation tool (10) configured to give a command regarding a speed change operation; and
a transmission device (11) configured to change a speed of motive power of the motor section and transmit the changed motive power to the travel device (S), and switch a speed change state based on the command from the at least one speed change operation tool (10), and
the at least one speed change operation tool (10) includes a main operation tool (23) provided in the driving section (4), and an auxiliary operation tool (24,30),
the work vehicle being **characterized in that** the travel body (1) has a rear section provided with a loading platform (8) for placing cargo thereon, and the auxiliary operation tool (24,30) is provided at a location in the travel body (1) different from the driving section (4).

2. The work vehicle according to claim 1, wherein the auxiliary operation tool (24,30) is provided on a lateral side of a body of the work vehicle.

3. The work vehicle according to claim 2,
wherein the driving section is provided with a rollover protection structure (7), and
the auxiliary operation tool is provided on the rollover protection structure (7).

4. The work vehicle according to claim 1, wherein the auxiliary operation tool (24,30) is provided on the loading platform (8).

5. The work vehicle according to claim 4, wherein the auxiliary operation tool (24,30) is provided at a rear end portion of the loading platform (8).

6. The work vehicle according to any one of claims 1 to 5, wherein the transmission device (11) is configured to switch to a low-speed travel state approximately corresponding to a walking speed in response to a travel command from the auxiliary operation tool (24,30).

7. The work vehicle according to any one of claims 1 to 6, wherein the auxiliary operation tool (24) is a push-operated switch (24A,24B) configured to give a travel command in response to being pushed.

8. The work vehicle according to any one of claims 1 to 6, wherein the auxiliary operation tool (30) is a lever switch configured to switch between a neutral state and a travel command state, and biased to return to the neutral state.

## Patentansprüche

1. Arbeitsfahrzeug, umfassend einen Fahrkörper (1),
wobei der Fahrkörper (1) Folgendes beinhaltet:
einen Motorabschnitt;
eine Fahrvorrichtung (S);
einen Fahrbereich (4), der von einem Fahrer besteigbar ist;
mindestens ein Geschwindigkeitsänderungsbedienelement (10), das konfiguriert ist, um einen Befehl in Bezug auf eine Geschwindigkeitsänderungsbetätigung zu erteilen; und
eine Getriebevorrichtung (11), die konfiguriert ist, um eine Geschwindigkeit der Antriebskraft des Motorabschnitts zu ändern und die geänderte Antriebskraft an die Fahrvorrichtung (S) zu übertragen, und einen Geschwindigkeitsänderungszustand basierend auf dem Befehl von dem mindestens einen Geschwindigkeitsänderungsbedienelement (10) umzuschalten, und
wobei das mindestens eine Geschwindigkeitsänderungsbedienelement (10) ein Hauptbedienelement (23), das in dem Fahrbereich (4) bereitgestellt ist, und ein Hilfsbedienelement (24, 30) beinhaltet,
wobei das Arbeitsfahrzeug **dadurch gekennzeichnet ist, dass** der Fahrkörper (1) einen hinteren Bereich aufweist, der mit einer Ladeplattform (8) zum Platzieren von Ladung darauf versehen ist, und das Hilfsbedienelement (24, 30) an einer Stelle in dem Fahrkörper (1) bereitgestellt ist, die von dem Fahrbereich (4) verschieden ist.

2. Arbeitsfahrzeug nach Anspruch 1, wobei das Hilfsbedienelement (24, 30) an einer seitlichen Seite eines Körpers des Arbeitsfahrzeugs bereitgestellt ist.

3. Arbeitsfahrzeug nach Anspruch 2,
wobei der Fahrbereich mit einer Überrollschutzstruktur (7) versehen ist und das Hilfsbedienelement an der Überrollschutzstruktur (7) bereitgestellt ist.

4. Arbeitsfahrzeug nach Anspruch 1, wobei das Hilfsbedienelement (24, 30) an der Ladeplattform (8) bereitgestellt ist.

5. Arbeitsfahrzeug nach Anspruch 4, wobei das Hilfsbedienelement (24, 30) an einem hinteren Endabschnitt der Ladeplattform (8) bereitgestellt ist.

6. Arbeitsfahrzeug nach einem der Ansprüche 1 bis 5, wobei die Getriebevorrichtung (11) konfiguriert ist, um als Reaktion auf einen Fahrbefehl von dem Hilfsbedienelement (24, 30) in einen Langsamfahrzustand umzuschalten, der ungefähr einer Schrittgeschwindigkeit entspricht.

7. Arbeitsfahrzeug nach einem der Ansprüche 1 bis 6, wobei das Hilfsbedienelement (24) ein druckbetätigter Schalter (24A, 24B) ist, der konfiguriert ist, um als Reaktion auf ein Drücken einen Fahrbefehl zu erteilen.

8. Arbeitsfahrzeug nach einem der Ansprüche 1 bis 6, wobei das Hilfsbedienelement (30) ein Hebelschalter ist, der konfiguriert ist, um zwischen einem Neutralzustand und einem Fahrbefehlszustand umzuschalten, und vorgespannt ist, um in den Neutralzustand zurückzukehren.

## Revendications

1. Véhicule de travail, comprenant un châssis (1),
dans lequel le châssis (1) comprend :
une section de moteur ;
un dispositif de déplacement (S) ;
une section de conduite (4) sur laquelle un conducteur peut prendre place ;
au moins un organe de commande de changement de vitesse (10) configuré pour délivrer une commande relative à une opération de changement de vitesse ; et
un dispositif de transmission (11) configuré pour changer une vitesse de la force motrice de la section de moteur et transmettre la force motrice dont la vitesse a été changée au dispositif de déplacement (S), et déclencher un état de changement de vitesse sur la base de la commande provenant de l'au moins un organe de commande de changement de vitesse (10), et
l'au moins un organe de commande de changement de vitesse (10) comprend un organe de commande principal (23) prévu dans la section de conduite (4), et un organe de commande auxiliaire (24, 30),
le véhicule de travail étant **caractérisé en ce que** le châssis (1) comporte une section arrière pourvue d'une plateforme de chargement (8) destinée à recevoir une cargaison, et l'organe de commande auxiliaire (24, 30) est prévu à un emplacement sur le châssis (1) différent de la section de conduite (4).

2. Véhicule de travail selon la revendication 1, dans lequel l'organe de commande auxiliaire (24, 30) est prévu sur un côté latéral d'un châssis du véhicule de travail.

3. Véhicule de travail selon la revendication 2,
dans lequel la section de conduite est pourvue d'une structure de protection contre le retournement (7), et
l'organe de commande auxiliaire est prévu sur la structure de protection contre le retournement (7).

4. Véhicule de travail selon la revendication 1, dans lequel l'organe de commande auxiliaire (24, 30) est prévu sur la plateforme de chargement (8).

5. Véhicule de travail selon la revendication 4, dans lequel l'organe de commande auxiliaire (24, 30) est prévu au niveau d'une partie d'extrémité arrière de la plateforme de chargement (8).

6. Véhicule de travail selon l'une quelconque des revendications 1 à 5, dans lequel le dispositif de transmission (11) est configuré pour passer à un état de déplacement à faible vitesse qui correspond approximativement à une vitesse de marche en réponse à une commande de déplacement provenant de l'organe de commande auxiliaire (24, 30).

7. Véhicule de travail selon l'une quelconque des revendications 1 à 6, dans lequel l'organe de commande auxiliaire (24) est un commutateur actionné par pression (24A, 24B) configuré pour délivrer une commande de déplacement en réponse à son actionnement.

8. Véhicule de travail selon l'une quelconque des revendications 1 à 6, dans lequel l'organe de commande auxiliaire (30) est un commutateur à levier configuré pour basculer entre un état neutre et un état de commande de déplacement, et précontraint pour revenir à l'état neutre.
